# EUROPEAN PATENT APPLICATION

(11) **EP 4 579 985 A1**
(43) Date of publication of application: **02.07.2025**
(21) Application number: 24160480.0
(22) Date of filing: 29.02.2024
(51) Int. Cl.: H02J 3/38, H02J 3/32

(54) **CONTROL SYSTEM FOR MICROGRID AND MICROGRID**

(30) Priority: 28.12.2023 CN 202311845960
(71) Applicant: Schneider Electric (China) Co., Ltd., Beijing 100102 (CN)
(72) Inventor: STOKMAN, Henricus David, Beijing 100102 (CN); SHI, Ying, Beijing 100102 (CN); ZHAO, Haijun, Beijing 100102 (CN); YUAN, Xu, Beijing 100102 (CN); LI, Ganlin, Beijing 100102 (CN)
(74) Representative: Manitz Finsterwald Patent- und Rechtsanwaltspartnerschaft mbB

(57) **Abstract**

Embodiments of the present disclosure provide a control system for a microgrid and a microgrid. The control system comprises: at least one main switching device arranged in at least one circuit group and coupled to a main bus, respectively, the main switching device comprising a main output port and a main input port; at least one branch switching device arranged in the circuit group and comprising: a branch input port coupled to the main output port of corresponding main switching device to receive a main signal from the corresponding main switching device; and a branch output port coupled to the prosumer or the source device of the circuit group to allow the at least one branch switching device to control an active output state of the prosumer or the source device. In this manner, the control system can easily facilitate maintenance and improve the safety and reliability of the circuit.

## Description

### FIELD

Example embodiments of the present disclosure generally relates to the field of power equipment, and more particularly to a control system for a microgrid and an associated microgrid.

### BACKGROUND

A micro-grid, also known as a microgrid, refers to a small-scale power generation and distribution system composed of distributed power sources, energy storage devices, energy conversion devices, loads, monitoring and protection devices, etc. A microgrid aims to achieve the flexible and efficient application of distributed power sources, and address the problem of connecting a large number and diverse forms of distributed power sources to the grid.

Unlike traditional distribution networks, a microgrid has numerous distributed power sources, also known as source devices, or prosumers. Prosumers can achieve bidirectional transformation, serving as sources or loads depending on the situation, such as in the case of vehicle-to-grid (V2G) charging stations. The current microgrid control system faces issues such as prolonged isolated operation of prosumers, and safety risks posed by electrified switchgear at lower levels for maintenance personnel, etc.

### SUMMARY

In a first aspect of the present disclosure, a control system for a microgrid is provided. The microgrid comprises at least one circuit group coupled to a main bus, the at least one circuit group comprising at least one of a prosumer, a source device and a load. The control system comprises at least one main switching device arranged in the at least one circuit group and coupled to the main bus, respectively, the at least one main switching device comprising a main output port and a main input port coupled to a main power supply module and a main control module, the main power supply module being configured to supply power to the main input port of the at least one main switching device; at least one branch switching device arranged in each of the at least one circuit group and comprising: a branch input port coupled to the main output port of corresponding one of the at least one main switching device to receive, from the main output port, a main signal from the corresponding main switching device; and a branch output port coupled to the prosumer or the source device of the circuit group to allow the at least one branch switching device to control, at least in accordance with the main signal, an active output state of the prosumer or the source device.

In some embodiments, the control system further comprises: at least one branch power supply module arranged in each of the at least one circuit group and coupled to the branch input port of corresponding one of the at least one branch switching device, the at least one branch power supply module being configured to at least supply power to the branch input port of the at least one branch switching device.

In some embodiments, each of the at least one branch power supply module is coupled to the main output port of the corresponding main switching device to control, according to the main signal output from the main output port, power supply to the branch input port of the at least one branch switching device in the circuit group where the branch power supply module is located.

In some embodiments, the control system further comprises a main bus output unit coupled to the main input port of the at least one main switching device and configured to, in response to occurrence of an event that requires stopping the entire microgrid, issue a disable signal to the main input port.

In some embodiments, the at least one main switching device is configured to enter a hot standby state or a disconnected state in response to at least one of the following main control conditions being met: receiving the disable signal from the main input port; the at least one main switching device detecting a line fault; the at least one main switching device receiving a hot standby signal or a disconnection signal from an external device or a local operating interface; and the at least one main switching device failing self-check, wherein in a case where the at least one main switching device is in the hot standby state or the disconnected state, the active output state of the prosumer or the source device in the corresponding circuit group is disabled.

In some embodiments, the at least one main switching device is configured to issue the disable signal from the main output port in response to at least one of the following being met: the at least one main switching device being in the hot standby state or the disconnected state; and the main input port of the at least one main switching device being unpowered.

In some embodiments, the at least one branch switching device is configured to enter a hot standby state or a disconnected state in response to at least one of the following being met: receiving a disable signal from the branch input port; the at least one branch switching device detecting a line fault; the at least one branch switching device receiving a hot standby signal or a disconnection signal from an external device or a local operating interface; and the at least one branch switching device failing self-check, wherein in a case where the at least one branch switching device is in the hot standby state or the disconnected state, the active output state of the corresponding prosumer or the source device is disabled.

In some embodiments, the at least one branch switching device comprises: an auxiliary contact configured to be associated with a state of a primary contact of the at least one branch switching device and connected in series between the branch output port and the corresponding prosumer or the source device.

In some embodiments, the control system further comprises: at least one auxiliary switching device arranged in one of the at least one circuit group having a load, and coupled between the corresponding main switching device and the load to control on-off of power supply to the load.

In some embodiments, at least one of the main switching device and the branch switching device comprises a solid state circuit breaker.

The control system according to embodiments of the present disclosure can realize circuit group control and branch control under circuit group of microgrid. For example, in the case of circuit group control, all branch circuit breakers in the circuit group can be put in hot standby or disconnected state, halting the active output of prosumers or source devices. In addition, the control system according to embodiments of the present disclosure can also realize centralized shutdown, disabling the active output state of all prosumers or source devices in all circuit groups within the microgrid. In this way, the control system according to embodiments of the present disclosure can easily realize the regional or centralized transition of switching devices in the microgrid into hot standby or disconnected state, thereby aiding in maintenance and improving the safety and reliability of the circuits.

According to second embodiments of the present disclosure, a microgrid is provided. The microgrid comprises: at least one circuit group coupled to a main bus and comprising at least one of a prosumer, a source device, and a load; and the control system according to the first aspect described above.

It should be understood that the contents described in this section are not intended to limit the key features or important features of the present disclosure, nor are they intended to limit the scope of the disclosure. Other features of the disclosure will become readily understood from the following description.

### BRIEF DESCRIPTION OF THE DRAWINGS

The above and other features, advantages and aspects of the various embodiments of the present disclosure will become more apparent in conjunction with the accompanying drawings and with reference to the following detailed description. In the drawings, like or similar reference numerals denote like or similar elements, wherein:
FIG. 1 shows a simplified schematic diagram of a microgrid according to embodiments of the present disclosure;
FIG. 2 shows a schematic flow diagram of all main switching devices in the control microgrid according to embodiments of the present disclosure entering a hot standby or disconnected state;
FIG. 3 shows a schematic flow diagram of one or more circuit groups in the control microgrid according to embodiments of the present disclosure, in which all branch switching devices enter a hot standby or disconnected state;
FIG. 4 shows a schematic flow diagram of the active output state of a prosumer or a source device in one or more branches of the control microgrid being disabled according to embodiments of the present disclosure;
FIG. 5 shows a simplified schematic diagram of a branch switching device according to embodiments of the present disclosure; and
FIG. 6 shows a simplified schematic diagram of a microgrid according to embodiments of the present disclosure.

### DETAILED DESCRIPTION

Embodiments of the present disclosure will be described in more detail below with reference to the accompanying drawings. Although certain embodiments of the disclosure are illustrated in the drawings, it should be understood that the present disclosure may be embodied in various forms and should not be construed as limited to embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the titles of any section/sub-section provided in this article are not restrictive. Various embodiments are described throughout this article, and any type of embodiment can be included under any section/sub-section. In addition, the embodiments described in any section/sub-section can be combined in any way with any other embodiments described in the same section/sub-section and/or different sections/sub-sections.

In the description of embodiments of the present disclosure, the term "comprise(s)" and its variants used herein indicate open inclusion, that is, "comprising but not limited to". The terms "based on" should be interpreted as "based at least in part on". The term "an embodiment" or "the embodiment" should be interpreted as "at least one embodiment". The term "some embodiments" should be interpreted as "at least some embodiments". The following may also include other explicit and implicit definitions. The terms "first", "second", etc. may refer to different or he same objects. Other explicit and implicit definitions may also be comprised below.

The previous text briefly mentioned some problems that may be caused by tripping or disconnection of the main circuit breaker during the line fault or line maintenance in traditional microgrid control systems. If a lower-level prosumer of the main circuit breaker continues to operate in a power supply mode, it may pose a risk to the personal safety of maintenance personnel. At the same time, due to changes in the grounding system, prolonged isolated operation of a prosumer without a ground connection system may cause multiple safety issues such as the inability to identify leakage current. When power is restored to the main bus, it may be difficult to connect the branch bus and main bus to the grid.

Therefore, it is necessary to provide a safe and reliable system solution to ensure that in the event of a line fault or line maintenance, the circuit breaker and the active output of its prosumer or other source devices can be automatically turned off to prevent potential safety issues.

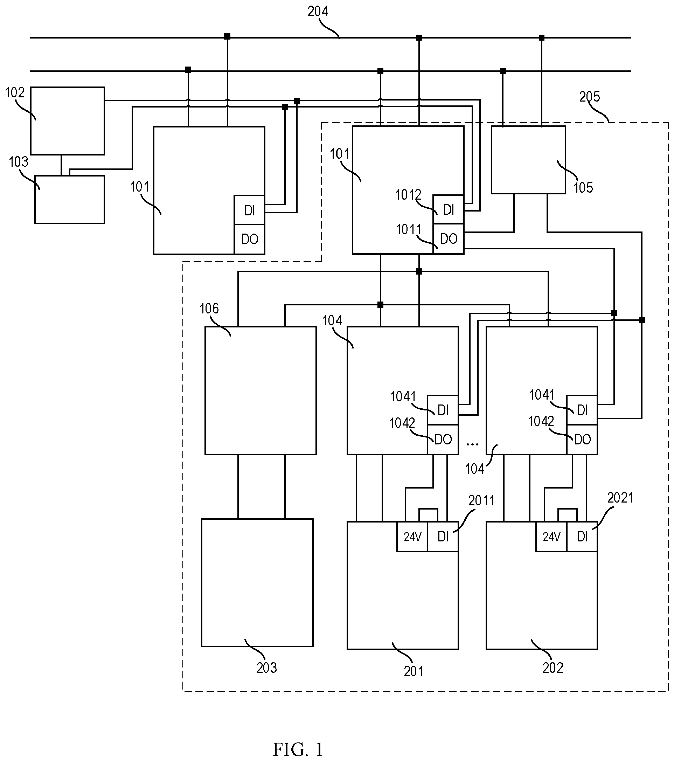

According to embodiments of the present disclosure, a control system for a microgrid and associated microgrid are provided to solve or at least partially solve the above-mentioned problems or other potential problems in traditional solutions. FIG. 1 shows a simplified schematic diagram of a microgrid according to embodiments of the present disclosure. As shown in FIG. 1, generally, the microgrid according to embodiments of the present disclosure comprises at least one circuit group coupled to the main bus 204 and a control system. The microgrid as shown in FIG. 1 comprises two circuit groups, one of which only shows the main switching device 101 and not the other branches. Another circuit group exemplarily shows the main switching device 101 and the its downstream branches. The concept according to the present disclosure will be described using this circuit group as an example. It should be understood that the situation is similar for other circuit groups and will not be repeated separately in the following text.

As shown in FIG. 1, each circuit group in the microgrid may comprise at least one of a prosumer 201, a source device 202, and a load 203. The source device 202 herein refers to a device that generates electricity. Load 203 refers to a device that consumes electricity. The term "Prosumer" is a combination of the terms "Producer" and "Consumer", used to describe a new role in the energy field. In the microgrid system, prosumer 201 refers to an entity or individual that can both generate energy (such as solar energy, wind energy, etc.) and consume energy. In other words, prosumer 201 is not only a producer of energy (corresponding to a source device), but also a consumer of energy (corresponding to a load). A prosumer 201 is usually equipped with renewable energy devices 202, such as solar panels or wind turbines, to generate its own electricity. At the same time, they are also connected to the microgrid system and can supply the excess electricity they generate to other members of the microgrid or obtain electricity from the microgrid, with bidirectional energy flow characteristics. This enables a prosumer 201 to play a positive role in the microgrid system, promoting more efficient allocation and utilization of energy. Overall, a prosumer 201 represents the integration of energy production and consumption, bringing more flexible, sustainable, and intelligent energy management to the microgrid system.

The control system for a microgrid according to embodiments of the present disclosure generally comprises at least one main switching device 101 and at least one branch switching device 104. The number of main switching devices 101 corresponds to the number of circuit groups 205 in the microgrid. For example, FIG. 1 shows two main switching devices 101 corresponding to two circuit groups 205. The main switching device 101 is arranged in the corresponding circuit group 205 and coupled to the main bus 201. The main switching device 101 corresponds to the main switch of the corresponding circuit group 205, which controls at least the active output state of all prosumers 201 and source devices 202 in the circuit group 205. The active output state mentioned herein refers to the state in which prosumers 201 and source devices 202 output power as energy providers.

Each main switching device 101 comprises a main input port 1012 and a main output port 1011. The main input port 1012 may be a digital input (DI) port, and the main output port 1011 may be a digital output (DO) port. The main power supply module 102 in the microgrid is coupled to the main input port 1012 to supply power to the main input port 1012 of the main switching device 101 via the main input port 1012. The main input port 1012 may also be called as an enable input port or an enable input unit. Without power supply, it cannot receive or process signals, causing the entire switching device to enter a hot standby or disconnected state.

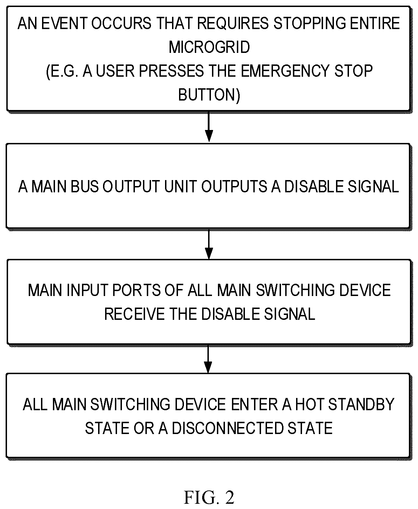

At least one branch switching device 104 is arranged in each circuit group 205, and the number of branch switching devices 104 corresponds to the number of prosumers 201 and source devices 202 in the circuit group 205. As shown in FIG. 1, the circuit group 205 shown in the dashed box comprises two branch switching devices 104, which respectively control the active output states of the prosumers 201 and source devices 202 they are connected to. That is to say, in some embodiments, one branch switching device 104 can be used to control the active output states of one or more prosumers 201 or source devices 202 in the branch where it is located. Similar to the main switching device 101, each branch switching device 104 may comprise a branch input port 1041 and a branch output port 1042. The branch input port 1041 may be a digital input (DI) port, and the branch output port 1042 may be a digital output (DO) port. The branch output port 1042 is coupled to the input port of a prosumer 201 and/or a source device 202 to thereby control the active output state of the correspond prosumer 201 or source device 202. The specific process will be described below in conjunction with FIGS. 2 to 4.

For the pure load branch (i.e., there is no prosumer 201 or source equipment 202 in this branch) in the circuit group 205, an auxiliary switching device 106 may be used to control the on and off of the power supply to the load 203, as shown in FIG. 1.

In some embodiments, the main switching device 101 and/or the branch switching device 104 may employ a solid state circuit breaker. In this manner, it is possible to improve the response speed of the switching device, thereby improving the response capability of the circuit, and thereby improving the safety and reliability of the circuit.

In some embodiments, each circuit group 205 in the microgrid may comprise a branch power supply module 105. The branch power supply module 105 is coupled to the branch input port 1041 of the branch switching device 104 of the circuit group 205, so as to be able to supply power to the branch input port 1041 of the branch switching device 104. Similar to the main input port 1012 of the main switching device 101, the branch input port 1041 can be referred to as an enable input port or an enable input unit. Without power supply, it cannot receive or process signals, causing the entire switching device to enter a hot standby or disconnected state. In some embodiments, the branch power supply module 105 may also be coupled to the main output port 1011 of the main switching device 101 corresponding to the circuit group 205 to control the power supply of the branch input port 1041 of the corresponding branch switching device 104 according to the main signal output by the main output port 1011.

In some embodiments, the control system of the microgrid further comprises a main bus output unit 103. The main bus output unit 103 may be an output port of an upper-level control system for outputting signals and/or a user operation interface, such as a button, a touch screen, etc., for controlling the entire microgrid. The main bus output unit 103 is coupled to the main input port 1012 of the main switching device 101 in the microgrid for controlling the state of the main switching device 101.

In the following, it will be described how the control system controls the active output state of the corresponding prosumer 201 and source device 202 when there is a fault or maintenance in the microgrid in conjunction with FIGS. 2 to 4. FIG. 2 shows a schematic diagram of the control flow when there is an event that requires halting the entire microgrid. As shown in FIG. 2, if an event that requires halting the entire microgrid occurs, such as the user pressing the emergency stop button for halting the microgrid, the main bus output unit 103 will output a disable signal to the main switching devices 101 of all circuit groups 205 in the microgrid, for example, in the form of opening main output ports.

All main switching devices 101 will enter the hot standby or disconnected state after receiving the disable signal. The hot standby state indicates that the circuit group 205 or branch where the switching device is located is in a state of not actively outputting power, but the switching device does not have isolation capability at this time. The disconnected state refers to the power function of the prosumer 201 and/or the device source 202 in the circuit group 205 or branch where the switching device is located being in the disconnected state. That is to say, when the main switching device 101 is in the hot standby or disconnected state, the active output states of all prosumers 201 or source devices 202 in the circuit group 205 are disabled, and the prosumer 201 can only be used as a load in this case.

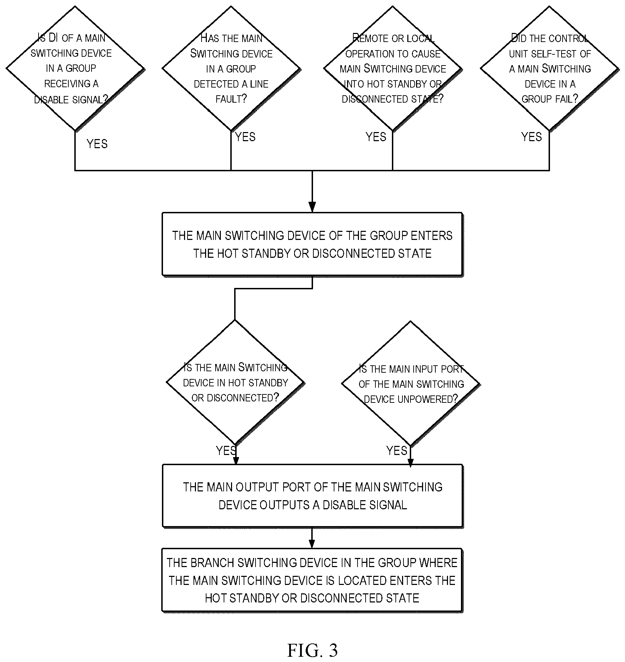

FIG. 3 shows a schematic diagram of the control flow for controlling the active output status of the prosumer 201 and the source device 202 in a certain circuit group 205 of the microgrid. As shown in FIG. 3, the corresponding main switching device 101 will enter a hot standby or Disconnected state when at least one of the following conditions is met: receiving the disable signal from the main input port 1012; the main switching device 101 detecting a line fault; the main switching device 101 receiving a hot standby signal or a disconnection signal from an external device or a local operating interface; or the main switching device 101 failing self-check.

Specifically, as previously mentioned, if a disable signal is received from the main input port 1012, for example, from the main bus output unit 103, the main switching device 101 will enter a hot standby or Disconnected state. In some embodiments, the main bus output unit 103 may output a disable signal only for the main switching device 101 corresponding to one of the plurality of circuit groups 205, so that only the main switching device 101 enters a hot standby or Disconnected state, while the other main switching devices 101 corresponding to the other circuit groups 205 can still be in normal operation, thereby improving the pertinence of system maintenance.

In addition, if the main switching device 101 detects a fault in the line or fails self-check, the main switching device 101 will also enter the hot standby or disconnect state. In addition, the main switching device 101 can enter the hot standby or disconnect state upon receiving a hot standby or disconnect signal from the local operation interface. The local operation interface may refer to the operation interface provided by a button, a handle, or a touch screen on the main switching device 101. For example, a user can issue a hot standby or disconnect signal to the main switching device 101 by operating the button on the main switching device 101, thereby causing the main switching device 101 to enter the hot standby or disconnect state.

Furthermore, the main switching device 101 may also be coupled with an external device. The external device herein may be a local control device, a remote control device, etc., coupled to the switching device through wired or wireless means. For example, the external device may be a terminal device such as users' mobile phone. The external device may also control the switching device to enter a hot standby or disconnected state.

After meeting at least one of the above conditions, the corresponding main switching device 101 will enter the hot standby or Disconnected state. If the main switching device 101 is in the hot standby or Disconnected state, its main output port 1011 will output a disable signal to disable the active output states of all prosumers 201 or the source devices 202 in the circuit group 205 where the main switching device 101 is located.

In some embodiments, if the controller of the main switching device 101 is unpowered, its main output port 1011 will also output a disable signal, so that the active output states of all prosumers 201 or the source devices 202 in the circuit group 205 where the main switching device 101 are located are disabled. The case of a controller of a main switching device 101 being unpowered is that, for example, the main power supply module 102 may stop supplying power to the main switching device 101 under the control of the main bus output unit 103. Of course, the case where the controller of the main switching device 101 is unpower may also be the case where the main power supply module 102 stops supplying power to it due to other reasons.

In some embodiments, the main switching device 101 may also control the external power supply of the branch power supply module 105 in the circuit group 205 where the main switching device 101 is located. If the main output port 1011 of the main switching device 101 outputs a disable signal due to being in a hot standby or disconnected state, the power supply of the branch power supply module 105 to the branch input port 1041 of the branch switching device 104 in the circuit group 205 will also be disabled, so that these branch switching devices 104 are in a hot standby or disconnected state, and finally the active output states of all the prosumers 201 or the source devices 202 in the circuit group 205 where the main switching device 101 is located are disabled.

That is to say, if the main switching device 101 is in a hot standby state and/or the branch power supply module 105 is in an unpowered state, a disable signal will be output from its main output port 1011 to the corresponding branch input port 1041 of the branch switching device 104. After receiving the disable signal, the branch switching device 104 will enter a hot standby or disconnected state, so that its branch output port 1042 outputs a disable signal. After receiving the disable signal via the input port 2011 of the corresponding prosumer 201 or the input port 2021 of the source device 202, the active output state of the prosumer 201 or the source device 202 will be disabled. In this manner, in response to one of the conditions where the main switching device 101 is in a hot standby state and where the branch power supply module 105 is in an unpowered state is met, the active output states of all prosumers 201 or the source devices 202 in the corresponding circuit group 205 are caused to be disabled, thereby improving the reliability and safety of the microgrid.

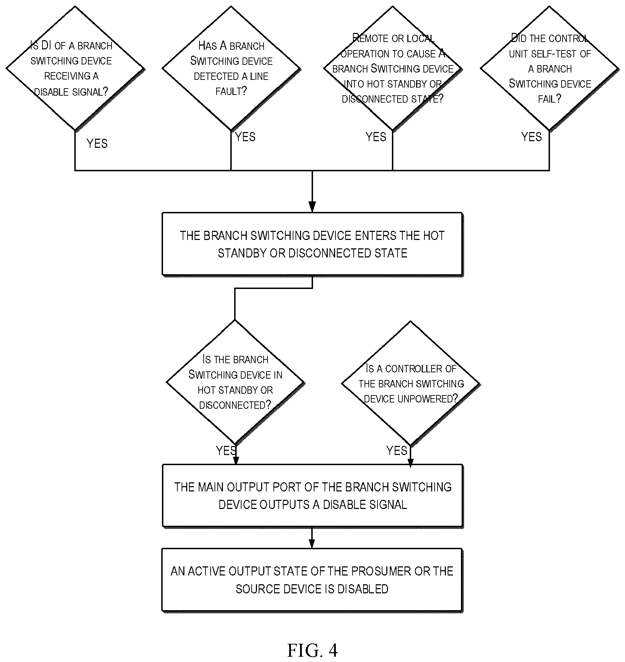

FIG. 4 shows a schematic diagram of the control flow for controlling the active output state of a prosumer 201 and a source device 202 in a certain branch of a circuit group 205 in the microgrid. As shown in FIG. 4, the branch switching device 104 will enter a hot standby or disconnected state when at least one of the following conditions is met: receiving a disable signal from the branch input port 1041; the branch switching device 104 detecting a line fault; the branch switching device 104 receiving a hot standby signal or a disconnection signal from an external device or a local operating interface; and the branch switching device 104 failing self-check. Specifically, as mentioned above, if the main switching device 101 is in a hot standby or disconnected state, a disable signal will be output from its main output port 1011. If the disable signal is input from the branch input port 1041, the branch switching device 104 will enter a hot standby or disconnected state.

In some embodiments, the main switching device 101 may also issue a disable signal to the branch switching device 104 corresponding to one of a plurality of branches in the circuit group 205 where the main switching device 101 is located, thereby disabling only the active output of the prosumer 201 or the source device 202 in the branch, thereby improving the pertinence and reliability of circuit maintenance.

In addition, if the branch switching device 104 detects a fault in the line or fails a self-check, it will also enter the hot standby or disconnected state. Similar to the main switching device 101, the branch switching device 104 may also enter the hot standby or disconnected state upon receiving a hot standby or disconnection signal from the local operation interface. The local operation interface may refer to the operation interface provided by a button, a handle, or a touch screen on the branch switching device 104. For example, a user can issue a hot standby or disconnection signal to the branch switching device 104 by operating the button on the branch switching device 104, so that the branch switching device 104 enters the hot standby or disconnected state.

In addition, the branch switching device 104 may also be coupled with an external device. The external device may be a local control device, a remote control device, etc., coupled to the switching device through wired or wireless means. For example, the external device may be a terminal device such as a user's mobile phone. The external device may also control the switching device to enter a hot standby or disconnected state.

In response to at least one of the above conditions being met, the corresponding branch switching device 104 will enter the hot standby or disconnected state. If the branch switching device 104 is in the hot standby or disconnected state, its branch output port 1042 will output a disable signal, thereby causing the active output state of the corresponding prosumer 201 or the source device 202 to be disabled after the disable signal is received via the input port 2011 of the prosumer 201 or the source device 202 .

In some embodiments, alternatively or additionally, if the branch switching device 104 is in an unpowered state, the branch switching device 104 of the branch output port 1042 will output a disable signal, so that the active output states of all prosumers 201 or the source devices 202 in the branch where the branch switching device 104 is located are disabled.

It can be seen from the above description in conjunction with FIGS. 2 to 4 that the control system according to embodiments of the present disclosure can realize circuit group control and branch control under the circuit group 205 in the microgrid. For example, in the case of circuit group control, all branch circuit breakers in the circuit group 205 can be put in a hot standby or disconnected state, and the active output of the prosumer 201 or the source device 202 can be stopped. In addition, the control system according to embodiments of the present disclosure can also realize centralized shutdown, thereby disabling the active output state of all prosumers 201 or the source device 202 in the microgrid. In this way, the control system according to embodiments of the present disclosure facilitates the implementation of regional or centralized shutdown of the switching devices, which is conducive to maintenance and improves the safety and reliability of the circuit.

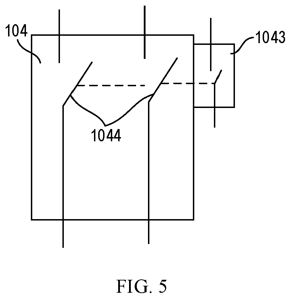

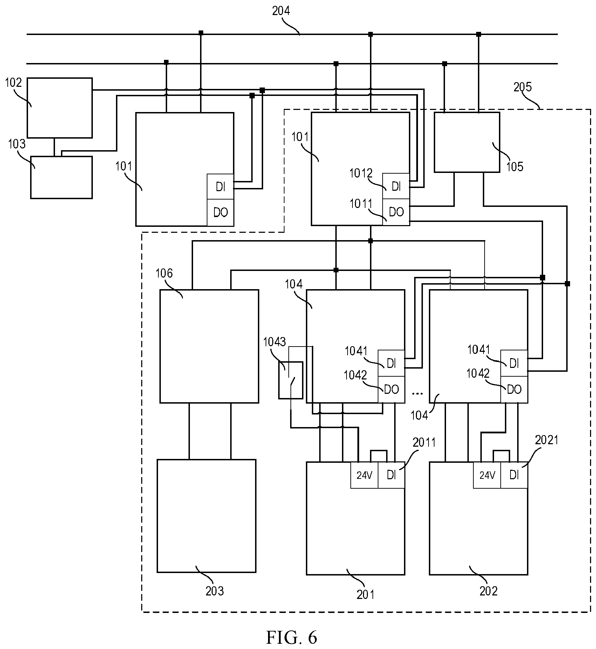

In some embodiments, to further improve safety performance, the branch switching device 104 may also comprise an auxiliary contact 1043. FIG. 5 shows a simplified schematic diagram of the branch switching device 104. As can be seen from FIG. 5, the branch switching device 104 comprises not only the main contact 1044, but also an auxiliary contact 1043 whose state is associated with the state of the main contact 1044. As shown in FIG. 6, the auxiliary contact 1043 can be connected in series between the branch output port 1042 of the branch switching device 104 and the corresponding prosumer 201 or source device 202. In this way, even in extreme cases where the internal control circuit of the branch switching device 104 fails, the auxiliary contact 1043 can still be used to ensure that the branch where the branch switching device 104 is located is disconnected when the main contact 1044 of the branch switching device 104 is disconnected, thereby improving safety during maintenance.

The above has described the various implementations of the present disclosure. The above description is exemplary, not exhaustive, and is not limited to the various implementations disclosed. Without departing from the scope and spirit of the various implementations described, many modifications and changes will be apparent to those skilled in the field. The terminology used in this article is intended to best explain the principles, practical applications, or improvements to the technology in the market, or to enable other ordinary technicians in the field to understand the various implementations disclosed in this article.

## Claims

1. A control system for a microgrid, the microgrid comprising at least one circuit group (205) coupled to a main bus (204), the at least one circuit group (205) comprising at least one of a prosumer (201), a source device (202) and a load (203), **characterized in that** the control system comprises:
at least one main switching device (101) arranged in the at least one circuit group (205) and coupled to the main bus (204), respectively, the at least one main switching device (101) comprising a main output port (1011) and a main input port (1012) coupled to a main power supply module (102) and a main control module, the main power supply module (102) being configured to supply power to the main input port (1012) of the at least one main switching device (101);
at least one branch switching device (104) arranged in each of the at least one circuit group (205) and comprising:
a branch input port (1041) coupled to the main output port (1011) of corresponding one of the at least one main switching device (101) to receive, from the main output port (1011), a main signal from the corresponding main switching device (101); and
a branch output port (1042) coupled to the prosumer (201) or the source device (202) of the circuit group (205) to allow the at least one branch switching device (104) to control, at least in accordance with the main signal, an active output state of the prosumer (201) or the source device (202).

2. The control system of claim 1, **characterized by** further comprising:
at least one branch power supply module (105) arranged in each of the at least one circuit group (205) and coupled to the branch input port (1041) of corresponding one of the at least one branch switching device (104), the at least one branch power supply module (105) being configured to at least supply power to the branch input port (1041) of the at least one branch switching device (104).

3. The control system of claim 2, **characterized in that** each of the at least one branch power supply module (105) is coupled to the main output port (1011) of the corresponding main switching device (101) to control, according to the main signal output from the main output port (1011), power supply to the branch input port (1041) of the at least one branch switching device (104) in the circuit group (205) where the branch power supply module (105) is located.

4. The control system of any one of claims 1-3, **characterized by** further comprising:
a main bus output unit (103) coupled to the main input port (1012) of the at least one main switching device (101) and configured to, in response to occurrence of an event that requires stopping the entire microgrid, issue a disable signal to the main input port (1012).

5. The control system of claim 4, **characterized in that** the at least one main switching device (101) is configured to enter a hot standby state or a disconnected state in response to at least one of the following main control conditions being met:
receiving the disable signal from the main input port (1012);
the at least one main switching device (101) detecting a line fault;
the at least one main switching device (101) receiving a hot standby signal or a disconnection signal from an external device or a local operating interface; and
the at least one main switching device (101) failing self-check,
wherein in a case where the at least one main switching device (101) is in the hot standby state or the disconnected state, the active output state of the prosumer (201) or the source device (202) in the corresponding circuit group (205) is disabled.

6. The control system of claim 5, **characterized in that** the at least one main switching device (101) is configured to issue the disable signal from the main output port (1011) in response to at least one of the following being met:
the at least one main switching device (101) being in the hot standby state or the disconnected state; and
the main input port of the at least one main switching device (101) being unpowered.

7. The control system of any one of claims 1-3, 5 and 6, **characterized in that** the at least one branch switching device (104) is configured to enter a hot standby state or a disconnected state in response to at least one of the following being met:
receiving a disable signal from the branch input port (1041);
the at least one branch switching device (104) detecting a line fault;
the at least one branch switching device (104) receiving a hot standby signal or a disconnection signal from an external device or a local operating interface; and
the at least one branch switching device (104) failing self-check,
wherein in a case where the at least one branch switching device (104) is in the hot standby state or the disconnected state, the active output state of the corresponding prosumer (201) or the source device (202) is disabled.

8. The control system of any one of claims 1-3, 5 and 6, **characterized in that** the at least one branch switching device (104) comprises:
an auxiliary contact (1043) configured to be associated with a state of a primary contact of the at least one branch switching device (104) and connected in series between the branch output port (1042) and the corresponding prosumer (201) or the source device (202).

9. The control system of any one of claims 1-3, 5 and 6, **characterized by** further comprising:
at least one auxiliary switching device (106) arranged in one of the at least one circuit group (205) having a load (203), and coupled between the corresponding main switching device (101) and the load (203) to control on-off of power supply to the load (203).

10. The control system of any one of claims 1-3, 5 and 6, **characterized in that** at least one of the main switching device (101) and the branch switching device (104) comprises a solid state circuit breaker.

11. A microgrid, **characterized by** comprising:
at least one circuit group (205) coupled to a main bus (204) and comprising at least one of a prosumer (201), a source device (202), and a load (203); and
a control system according to any one of claims 1-10.
